# EUROPÄISCHE PATENTSCHRIFT

(11) **EP 1 110 797 B1**
(45) Veröffentlichungstag und Bekanntmachung des Hinweises auf die Patenterteilung: **09.07.2008**
(21) Anmeldenummer: 00127021.4
(22) Anmeldetag: 09.12.2000
(51) Int. Cl.: B60L 3/00, H03K 17/0814

(54) **Einrichtung und Verfahren zum Stromrichter-Überlastschutz**
Installation and procedure for overload protection of power converters
Installation et procédé pour protéger des convertisseurs de puissance contre une surcharge

(30) Priorität: 23.12.1999 DE 19962615
(43) Veröffentlichungstag der Anmeldung: 27.06.2001
(73) Patentinhaber: Bombardier Transportation GmbH, 13627 Berlin (DE)
(72) Erfinder: Enzensberger, Gernot, 5430 Wettingen (CH); Mesic, Sead, 5416 Kirchdorf (CH); Jörg, Markus, 5424 Unterehrendingen (CH); Ehrler, Urs, 5412 Gebenstorf (CH); Lerjen, Markus, 5400 Baden (CH)
(74) Vertreter: Cohausz & Florack

(56) Entgegenhaltungen:
- EP-A- 0 288 971
- EP-A- 0 945 950
- US-A- 5 621 603
- US-A- 5 994 790

## Beschreibung

### Technisches Gebiet

Die Erfindung bezieht sich auf das Gebiet der Leistungshalbleiter, insbesondere auf eine Einrichtung und ein Verfahren zum Stromrichter-Überlastschutz.

### Stand der Technik

Herkömmlich wird in Wechselstromumrichtern bei einer Überschreitung eines bestimmten, maximal zulässigen Momentanwertes des Stroms auf der Netz- oder Motor- bzw. Lastseite eine sogenannte "selektive Stromrichter-Ventilsperre" eingeleitet. Als Folge dieser selektiven Stromrichter-Ventilsperre tritt eine zeitlich begrenzte Unterbrechung des Stromes auf der Netz- oder Lastseite auf. Die Dauer dieser Unterbrechung wird sowohl von den Eigenschaften des Netzes oder der Last als auch denjenigen der Steuer- und Regeleinrichtung bestimmt. Der Ablauf des Eingriffs dieser Art Überstrombegrenzung ist in dem Konferenzbericht "Electrical Drives and Power Electronics", Dubrovnik, Kroatien, 9. bis 11. Oktober 1996, Seiten 229 bis 234 beschrieben. Die Schutzmassnahmen sind dabei so ausgelegt, dass kleinstmögliche Auswirkungen auf den Fahrbetrieb auftreten.

Hierbei sind die Abgänge eines integrierten Hilfsbetriebestromrichters HSR mit Leistungsschutzschaltern versehen, die den Schutz der Leitung sowie des Hilfsbetriebestromrichters unter normalen Bedingungen sicherstellen sollen. Sprechen diese Leistungsschutzschalter bei einem Kurzschluss bzw. einer Überlast nicht oder verspätet an, so muss sichergestellt sein, dass der Hilfsbetriebestromrichter nicht beschädigt wird. Herkömmlich wird, wie beispielsweise in "Elektrische Bahnen, Kap. 6.7."Die Schutzeinrichtungen", von Ẑarko Filipović, Springer-Verlag, 1995 beschrieben, ein derartiger Überstromschutz durch einen unverzögerten Hauptschalter in Kombination mit flinken Sicherungen verwirklicht. In den ersten Entwicklungsjahren wurden zusätzliche ultraschnelle Kurzschliesser verwendet, die den Stromrichter durch Überbrükken entlasteten. Eine verfeinerte Kurzschliesser-Methode besteht dabei auf grund der grossen Ladung des Zwischenkreis-Stützkondensators in der Zündung sämtlicher Thyristoren. Bei herkömmlichen Hilfsbetriebestromrichtern HSR ist ein rascher Überstromschutz im Falle von Überlast oder Kurzschluss jedoch dennoch nicht immer zuverlässig sichergestellt, so dass es zu Beschädigungen des Hilfsbetriebestromrichters bei Überlast bzw. Kurzschluss kommen kann.

Bei Wechselrichtern, bei denen eine oder mehrere Lasten über Sicherungen oder Sicherungsautomaten an deren Ausgang angeschlossen sind, besteht nämlich die Forderung, dass der Wechselrichter im Fall einer Überlast oder eines Kurzschlusses in einem der abgesicherten Stromkreise immer seinen momentan maximal möglichen Strom liefert. Diese Forderung besteht, damit die Sicherungen ihre Funktion wahrnehmen können und innerhalb kürzester Frist den überlasteten bzw. kurzgeschlossenen Stromkreis abtrennen. Gerade diese Forderung kann aber im Stand der Technik nicht erfüllt werden. Beispielsweise kommt es im Falle eines Kurzschlusses oder einer Überlast, in dem ein Schutzschalter nicht anspricht, nämlich zu einer Beschädigung des Hilfsbetriebestromrichters, da keinerlei weitere Schutzmassnahmen für den Hilfsbetriebestromrichter vorgesehen sind.

Das Dokument EP 0 945 950 A2 offenbart eine Vorrichtung zur Ansteuerung eines Verbrauchers, wobei ein Schaltmittel und der Verbraucher in Reihe zwischen einer Versorgungsspannung und einer Masse geschaltet sind. Die Vorrichtung umfasst Mittel, die einen Kurzschluss des Verbrauchers gegen Masse und/oder die Versorgungsspannung erkennen. Ferner sind Mittel vorgesehen, die bei einem erkannten Kurzschluss eine adaptiv angepasste Ansteuerpause bewirken.

Das Dokument EP 0 288 971 A2 offenbart einen Festkörperschaltkreis mit einem einen ersten Ausgangsanschluss und einen zweiten Ausgangsanschluss überbrückenden Leistungsschalter, über den einer externen Last elektrischer Strom von einer separaten Spannungsquelle zugeleitet wird. Ferner umfasst der Festkörperschaltkreis eine Treiberschaltung, die ein erstes Steuersignal zur Betätigung des Leistungsschalters erzeugt, und einen dritten, mit der Treiberschaltung elektrisch verbundenen Ausgangsanschluss zur Abzweigung von elektrischer Energie von der Treiberschaltung als ein zweites Steuersignal, das einer separaten Schaltung über den dritten Ausgangsanschluss zugeleitet wird. Dieser bekannte Festkörperschaltkreis ist nicht nur in der Lage, die Spannungsversorgung einer externen Last zu steuern, sondern auch eine separate Schaltung anzutreiben, bei der es sich um einen weiteren Leistungsschalter, der mit dem Leistungsschalter des vorliegenden Festkörperschaltkreises zum Zwecke einer gesteuerten Spannungsversorgung einer externen Last zusammenwirkt, oder einer anderen Art von elektronischer Schaltung handeln kann.

### Darstellung der Erfindung

Der vorliegenden Erfindung liegt die Aufgabe zugrunde, eine Einrichtung und ein Verfahren zum Stromrichter-Überlastschutz zu schaffen, durch die im Fall einer Überlast oder eines Kurzschlusses in einem der abgesicherten Stromkreise innerhalb kürzester Zeit der überlastete bzw. kurzgeschlossene Stromkreis zuverlässig abgetrennt werden kann, auch wenn ein Schutzschalter nicht anspricht.

Erfindungsgemäss wird diese Aufgabe durch eine Einrichtung mit den Merkmalen des Anspruchs und durch ein Verfahren mit den Merkmalen des Anspruchs 9 gelöst. Vorteilhafte Ausgestaltungen der Erfindung sind in den Unteransprüchen angegeben.

### Kurze Beschreibung der Zeichnung

Nachfolgend wird die Erfindung anhand von in der Zeichnung dargestellten Ausführungsformen näher erläutert.

Es zeigen:
Fig. 1 eine Darstellung eines Blockschaltbildes einer erfindungsgemässen Einrichtung zum Stromrichter-Überlastschutz,
Fig. 2 eine Darstellung eines Stromverlaufs in einem Stromrichter-Zweigpaar über die Zeit,
Fig. 3 eine Darstellung des Zustands der Ventilsperre abhängig vom Momentanwert des Aussenleiterstroms am Ausgang des Hilfsbetriebestromrichters,
Fig. 4 für den Fall eines Kurzschlusses im Stromkreis des HilfsbetriebeNetzes mit angeschlossener Kühlmittelpumpe den Zeitverlauf des Pumpendrucks und des Effektivstroms für die Kurzschlussfälle "Schutzschalter öffnet" und "Schutzschalter öffnet nicht" und
Fig. 5 für den Fall eines Kurzschlusses im Stromkreis des HilfsbetriebeNetzes ohne angeschlossene Kühlmittelpumpe den Zeitverlauf des Pumpendrucks und des Effektivstroms für die Kurzschlussfälle "Schutzschalter öffnet" und "Schutzschalter öffnet nicht".

### Weg(e) zur Ausführung der Erfindung

Die vorliegende Erfindung ist beispielsweise bei der Energieversorgung von Hilfsbetrieben eines elektrischen AC- bzw. Wechselstrom-Triebfahrzeugs anwendbar. Für derartige Hilfsbetriebe sollen zwei redundante, erdfreie Netze mit einer 3-phasigen Spannung fester bzw. variabler Amplitude und Frequenz zur Verfügung stehen. Die Speisung der Hilfsbetriebenetze wird durch einen im Traktionsstromrichter integrierten Hilfsbetriebestromrichter sichergestellt.

Im vorliegenden erfindungsgemässen Ausführungsbeispiel sind die Abgänge eines integrierten Hilfsbetriebestromrichters HSR mit Leistungsschutzschaltern ausgerüstet. Dadurch sind die Leitungen gegen Überlast und Kurzschluss geschützt. Im Fall einer Überlast oder eines Kurzschlusses muss der Hilfsbetriebestromrichter hierfür zeitlich begrenzt immer seinen momentan maximal möglichen Strom liefern, damit die Schutzschalter ihre Funktion übernehmen können und innerhalb kürzester Frist den überlasteten bzw. kurzgeschlossenen Stromkreis abtrennen. Erfolgt jedoch während einer bestimmten Zeit keine Abtrennung des defekten Stromkreises, wird eine Gesamt-Ventilsperre des Hilfsbetriebestromrichters ausgelöst.

Bei allen Eingriffen, die eine Hilfsbetriebestromrichter-Schutzeinrichtung auslöst, sind jedoch die Auswirkungen auf das Hilfsbetriebenetz und den Traktionstrieb zu beachten. Deshalb wurde die erfindungsgemässe Einrichtung zum Stromrichter-Überlastschutz derart ausgebildet, dass sie die folgende Merkmale aufweist bzw. sicherstellt:
1) Sehr hohe Verfügbarkeit des Hilfsbetriebenetzes und des Traktionsbetriebs
2) Sehr hohe Selektivität der Schutzschalter
3) Auf der Niederspannungsseite kurzschlussfester Hilfsbetriebestromrichter
4) Möglichst wenig Betriebsstörungen des Traktionsstromrichters und Hilfsbetriebestromrichters durch Schutzeingriffe
5) Dynamische Vorgänge des Hilfsbetriebestromrichters in ordentlichen Betriebsarten führen zu keinen Hilfsbetriebestromrichter-Betriebsunterbrechnungen bzw. zu keinen Hilfsbetriebe-Netzeinbrüchen.

Zur Verwirklichung dieses vorstehend genannten Schutzkonzepts weist die erfindungsgemässe Einrichtung und das erfindungsgemässe Verfahren zum Stromrichter-Überlastschutz drei verschiedene Schutzeinrichtungen auf, die vor allem in Kombination einen zuverlässigen Schutz vor elektrischer Zerstörung im Falle einer Überlast bzw. eines Kurzschlusses bieten. Die entsprechenden Einrichtungen sind eine Einrichtung zur Momentanstrombegrenzung 1, eine Einrichtung zur Effektivstrombegrenzung 2 sowie eine Einrichtung zur Zeitbegrenzung.

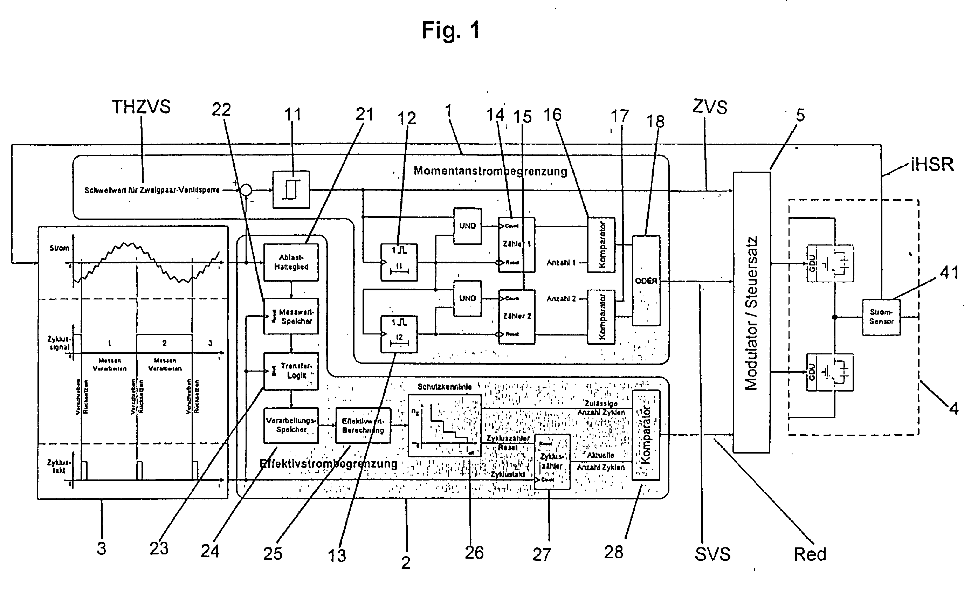

Ein Blockschaltbild eines erfindungsgemässen Stromrichter-Überlastschutzes ist in Fig. 1 gezeigt. Dieser Stromrichter-Überlastschutz umfasst die Einrichtung zur Momentanstrombegrenzung 1, die Einrichtung zur Effektivstrombegrenzung 2 sowie die (nicht gezeigte) Einrichtung zur Zeitbegrenzung. Diese Einrichtungen sind für jedes Zweigpaar 4 eines zusammengehörenden Stromrichtersatzes SR, beispielsweise einer Einphasenbrücke oder einer Drehstrombrücke, je einmal ausgebildet.

Zunächst wird nun auf den Aufbau der erfindungsgemässen Einrichtung zur Momentanstrombegrenzung 1 sowie deren Funktion genauer eingegangen.

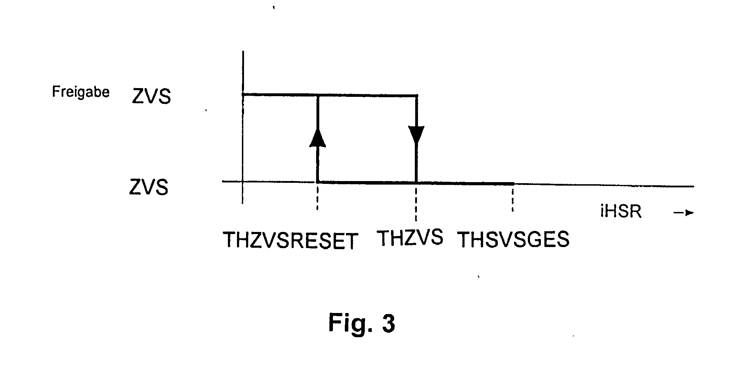

Die Einrichtung zur Momentanstrombegrenzung 1 umfasst im Prinzip einen Zweipunktregler mit einer unterlagerten Überwachung der Anzahl Eingriffe dieses Zweipunktreglers, der selektiv auf den Schaltzustand jedes Stromrichterzweigpaares 4 des Hilfsbetriebestromrichters HSR wirkt (siehe Fig. 3). Zeitlich gesehen ist die Momentanstrombegrenzung hierbei an kein festes Raster gebunden. Unter anderem umfasst die Einrichtung zur Momentanstrombegrenzung 1 einen Komparator 11, der, nachdem der Zweigpaar-Wechselstrom einen Schwellenwert THZVS für eine Zweigpaar-Ventilsperre, beispielsweise 1100 A, überschritten hat, beide elektronischen Schalter eines Stromrichterzweigpaars mittels Ausgabe eines Ausgangssignals ZVS an einen Modulator/Steuersatz 5 sperrt. Dieser Schwellenwert THZVS ist unter anderem in Fig. 3 gezeigt. In dieser Fig. 3 bezeichnet THZVS einen Schwellenwert der über einen Stromsensor 41 erfassten Aussenleiterströme iHSR am Ausgang des Hilfsbetriebestromrichters HSR, bei dessen Überschreitung die "Zweigpaar-Ventilsperre" ZVS ausgelöst wird, THZVSRESET bezeichnet einen Schwellenwert des Aussenleiterstroms iHSR am Ausgang des Hilfsbetriebestromrichters HSR, bei dessen Unterschreitung nach einer "Zweigpaar-Ventilsperre" ZVS eines Zweigpaars 4 die Taktung dieses Zweigpaars 4 wieder freigegeben wird und beträgt beispielsweise 200 A, und THSVSGES bezeichnet einen Schwellenwert der Aussenleiterströme iHSR am Ausgang des Hilfsbetriebestromrichters HSR, bei dessen Überschreitung eine Schutzabschaltung mit Hauptschalterauslösung ausgelöst wird.

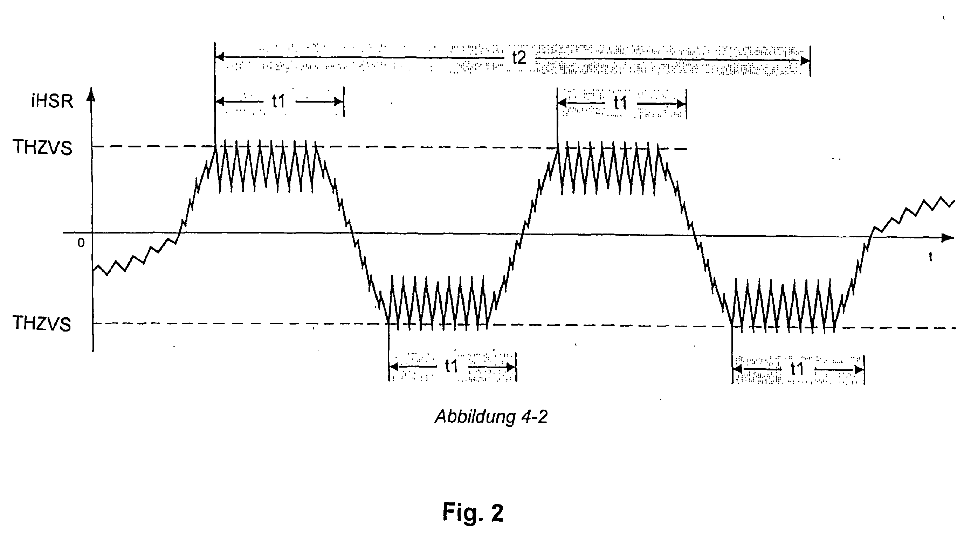

Eine Überwachung der Anzahl Eingriffe des Zweipunktreglers werden mit zwei Einrichtungen 12 und 13 jeweils Zeitfenstern mit Fenstergrössen t1 und t2 realisiert, wie in Fig. 2 gezeigt. In der Einrichtung 12 mit dem Zeitfenster t1 wird die Anzahl von Eingriffen der Triggerschwelle THZVS, d.h. des Schwellenwerts der Aussenleiterströme iHSR am Ausgang des Hilfsbetriebestromrichters HSR, in das Pulsmuster eines Zweigpaars 4 des Hilfsbetriebeströmrichters HSR, d.h. die Anzahl von Schwellenwertüberschreitungen des Zweigpaar-Wechselstroms iHSR, gezählt und in der Einrichtung 13 mit dem Zeitfenster t2 die Anzahl der Wiederholungen des Zeitfensters t1. Überschreitet eine der beiden aktuell gezählten Anzahlen von Ereignissen einen ihr zugeordneten Grenzwert ANZTHZVS, beispielsweise 15, oder ANZTt1, beispielsweise 3, so wird eine Stromrichter-Ventilsperre SVS eingeleitet. Das heisst, an Stelle nur eines Zweigpaares 4 werden sämtliche Zweigpaare des Hilfsbetriebestromrichters HSR gesperrt.

Für die Realisierung der Überwachung der Anzahl von Eingriffen des Zweipunktreglers sind, wie in Fig. 1 gezeigt, als Einrichtungen 12 und 13 mit Zeitfenstern t1 bzw. t2 zwei nicht retriggerbare Monoflops mit den Zeiten t1, beispielsweise 0,01 s, und t2, beispielsweise 0,2s, vorgesehen. Diese werden gemäss Fig. 2 mit jedem ersten Ansprechen des Zweipunktreglers getriggert und starten damit zwei unterschiedliche Zählvorgänge durch Zähler 14 und 15. Mit dem der Zeit t1 zugeordneten Zählvorgang wird durch den Zähler 14 die Anzahl von Schwellenwertüberschreitungen ANZTHZVS des Zweigpaar-Wechselstroms iHSR gezählt und mit dem der Zeit t2 zugeordneten Zähler 15 die Anzahl von Triggervorgängen ANZTt1 des der Zeit t1 zugeordneten Monoflops 12. Das Ergebnis der beiden Zählvorgänge wird jeweils in einem Komparator 16 bzw. 17 mit als Anz1 und Anz2 bezeichneten Grenzwerten verglichen. Die Ausgangssignale der Komparatoren 16 und 17 werden einem ODER-Gatter 18 zugeführt, so dass, wenn eine der beiden aktuell gezählten Anzahlen von Ereignissen, d.h. ein Zählwert, den ihr zugeordneten Grenzwert Anz1 bzw. Anz2 überschreitet, das ODER-Gatter 18 ein Signal ausgibt, aufgrund dessen eine Stromrichter-Ventilsperre SVS durch den Modulator/Steuersatz 5 eingeleitet wird. Das heisst, an Stelle nur eines Zweigpaares 4 werden sämtliche Zweigpaare der überwachten Stromrichterschaltung gesperrt.

Weiterhin umfasst die Einrichtung zum Stromrichter-Überlastschutz die Einrichtung zur Effektivstrombegrenzung 2, auf die im folgenden näher eingegangen wird.

Allgemein benötigt die Effektivstrombegrenzung im Gegensatz zur Momentanstrombegrenzung ein festes Raster, auf das sich die Berechnung des Effektivwertes stützen kann. Daher ist hier ein Zyklustakt erforderlich. Dabei wird die zeitliche Basis für die ablaufenden Prozesse der Effektivstrombegrenzung als Zyklus bezeichnet. Ein Zyklus ist dabei ein ganzzahliges Vielfaches n_{z} einer Halbperiode des zu begrenzenden Wechselstroms. Vorzugsweise beträgt n_{z} = 1 oder 2.

Prinzipiell gibt es in der Einrichtung zur Effektivstrombegrenzung 2 während jedes Zyklusses zwei voneinander getrennt ablaufende Prozesse. Der eine Prozess wird als Messvorgang, der andere als Verarbeitungsvorgang bezeichnet. Im Messvorgang wird der Phasenstrom durch ein Abtast-halteglied 21 abgetastet und die Abtastwerte werden in einem Mess-Speicher 22 abgelegt. Im Verarbeitungsvorgang wird in einer Effektivwert-Berechnungseinrichtung 25 aus den abgetasteten, in dem Messwert-Speicher 22 gespeicherten Messwerten des vorhergehenden Zyklus ein Effektivwert berechnet und in einem Komparator 28 mit einer Schutzkennlinie 26 verglichen. Daraufhin wird ein Signal entsprechend der zulässigen Anzahl von Zyklen für diesen Effektivwertbetrag ausgegeben. Ergibt der Vergleich der zulässigen Anzahl von Zyklen im Komparator 28 mit der aktuellen Anzahl von Zyklen aus einem Zykluszähler 27 eine Überschreitung der maximal zulässigen Anzahl Zyklen eines bestimmten Effektivwertbetrags, so wird ansprechend auf das Ausgangssignal des Komparators 28 die Aussteuerung des Stromrichters nach einem geeigneten Verfahren durch den Modulator/Steuersatz 5 reduziert. Der Zykluszähler 27 wird zurückgesetzt (Reset), sobald der Effektivwert die aktuelle Stufe der Schutzkennlinie 26 unterschreitet oder überschreitet, d.h. bei jedem Unter- bzw. Überschreiten wird der Zähler auf Null gesetzt.

Die vorstehend beschriebene Effektivstrombegrenzung ist somit im Prinzip eine Überwachung einer Anzahl Halbschwingungen nHS für einen bestimmten maximal zulässigen Effektivwert IHRSn, beispielsweise 300 A, des Stromes iHSRn am Ausgang des Hilfsbetriebestromrichters HSR. Erfolgt eine Überschreitung der maximal zulässigen Anzahl Halbschwingungen nHSR, die beispielsweise 1 beträgt, des bestimmten Effektivwertbetrages IHSRn so wird die Aussteuerung des Stromrichters durch den Modulator/Steuersatz 5 nach einem geeigneten Verfahren reduziert. Hierbei bezeichnet IHSRn den Schwellenwert des Effektivstromes in den Aussenleitern des Hilfsbetriebestromrichters HSR und nHS den Wert der zulässigen Anzahl Halbschwingungen der Ströme in den Aussenleitern des Hilfsbetriebestromrichters HSR, der auftreten darf.

Wie in Fig. 1, Bezugszeichen 3 gezeigt, existiert parallel zum Zeitverlauf des zu begrenzenden Wechselstromes iHSR ein nicht notwendigerweise phasengleiches Zyklussignal. Während jeder Halbperiode des Zyklussignals wird, wie bereits erwähnt, gleichzeitig in getrennten Prozessen gemessen und verarbeitet. Während jedes Wechsels des Zyklussignals werden die abgetasteten Strom-Ist-Werte aus dem Messwert-Speicher 22 in den Verarbeitungsspeicher 24 geschoben, der Messwert-Speicher zurückgesetzt und der Mess- und Verarbeitungsvorgang neu gestartet.

Zudem umfasst die erfindungsgemässe Einrichtung zum Stromrichter-Überlastschutz eine (nicht gezeigte) Einrichtung zur Zeitbegrenzung, die bevorzugterweise separat oder auch in der Einrichtung zur Effektivstrombegrenzung 2 realisiert ist. Das bedeutet, der Hilfsbetriebestromrichter-Überlastbetrieb wird nur für eine begrenzte Zeit aufrechterhalten. Erfolgt während einer bestimmten Zeit keine Trennung des überlasteten oder kurzgeschlossenen Stromkreises, wird ansprechend auf ein Ausgangssignal der Einrichtung zur Zeitbegrenzung der Hilfsbetriebestromrichter HSR gesperrt.

Im folgenden werden die Fälle aufgelistet, in denen eine derartige Sperrung des Hilfsbetriebestromrichters HSR durch die Einrichtung zur Zeitbegrenzung erfolgt.

### Fall 1:

Der Kühlmitteldruck unterschreitet einen vorgegebenen Wert KDR2, beispielsweise 750hPa, für eine Zeit TWAITDR2, beispielsweise 1 s, ununterbrochen.
Hierbei ist TWAITDR2 also eine vorgegebene Wartezeit nach einer Unterschreitung des unteren Druckwertes KDR2 im Kühlmittelkreislauf bis zur Auslösung einer entsprechenden Schutzmassnahme.

### Fall 2:

Der Effektivwert des Stromes am Ausgang der Hilfsbetriebestromrichter-Drehstrombrücke überschreitet einen Wert IHSRMAX, beispielsweise 250 A, ununterbrochen während einer Zeit TWAITOLH, beispielsweise 2 s.
Hierbei ist IHSRMAX ein Schwellenwert der Effektivströme in den Aussenleitern des Hilfsbetriebestromrichters, der nicht länger als die Zeit TWAITOLH überschritten sein darf. Der Wert IHSRMAX ist immer kleiner als IHSRn. Der Wert TWAITOLH bezeichnet die Wartezeit nach Überschreitung des Effektivstroms IHSRMAX in einem der Aussenleiter des Hilfsbetriebestromrichters bis zur Auslösung einer entsprechenden Schutzmassnahme. Mit jedem Ansprechen der Triggerschwelle IHSRMAX wird die Zeit TWAITOLH neu gestartet. Mit jeder Unterschreitung wird sie zurückgesetzt.

### Fall 3:

Die maximal zulässige Anzahl von Ansprechen der Triggerschwelle IHSRMAX in einem Zeitfenster TWAITKSH, beispielsweise 4 s, wird überschritten. Hierbei bezeichnet TWAITKSH ein Zeitfenster für die Ermittlung der Anzahl von Ansprechen der Triggerschwelle IHSRMAX. Dieses Zeitfenster wird nach Überschreitung der Triggerschwelle IHSRMAX gestartet und erst nach Ablauf der Zeit TWAITKSH zurückgesetzt. Weiterhin bezeichnet ANZIHSRMAX eine Anzahl von Ansprechen der Triggerschwelle IHSRMAX, beispielsweise 25 Mal, während der Fensterzeit TWAITKSH.

Anwendbar ist der erfindungsgemässe Stromrichter-Überlastschutz beispielsweise in einer Lok mit zwei Traktionsstromrichtern mit je einem integrierten Hilfsbetriebestromrichter HSR. Der eine Hilfsbetriebestromrichter HSR erzeugt eine variable und der andere eine fixe Drehspannung zur Speisung der Hilfsbetriebe auf der Lokomotive und dem Zug.

Im Falle eines Kurzschlusses liefert der Hilfsbetriebestromrichter HSR zeitlich begrenzt seinen momentan maximal möglichen Strom, damit die Schutzschalter ihre Funktion übernehmen können und innerhalb kürzester Frist den überlasteten bzw, kurzgeschlossenen Stromkreis abtrennen können.

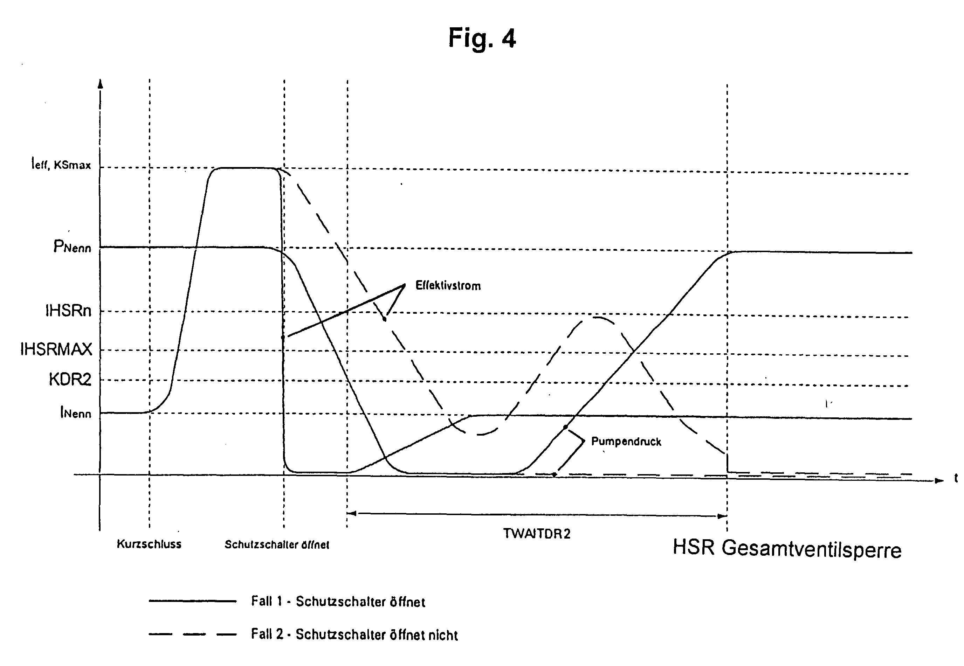

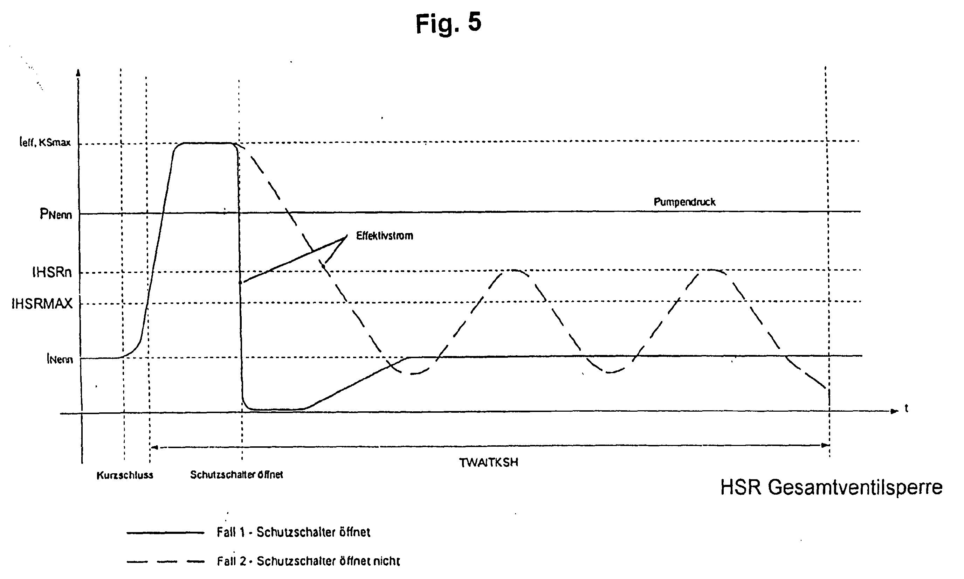

Abschliessend werden nur noch die für die erfindungsgemässe Einrichtung zum (Hilfsbetriebe-)Stromrichter-Überlastschutz relevanten Vorgänge, wie Lastzuschaltungen, Überlast und Kurzschluss im Hilfsbetriebenetz unter anderem anhand von Fig. 4 und 5 genauer beschrieben.

Zunächst wird jedoch noch allgemein auf diese relevanten Vorgänge allgemein eingegangen.

Bei Kurzschlüssen, die im Bereich zwischen dem Ausgang der Drehstrombrücke des Hilfsbetriebestromrichters HSR und der Trafosekundärseite vorkommen, also vor den Schutzgeräten, schaltet der gesamte Stromrichter SR ab. In diesen Fällen ist eine Betriebsunterbrechnung des gesamten Stromrichters SR erlaubt, da es ansonsten zu grösseren Beschädigungen des gesamten Stromrichters kommen könnte.

Im folgenden wird nun auf das dynamische Verhalten des Hilfsbetriebestromrichters HSR bei Verwendung der erfindungsgemässen Einrichtung zum Stromrichter-Überlastschutz genauer eingegangen.

In ordentlichen Betriebsarten, d.h. bei Lastzuschaltungen im Hilfsbetriebe-Netz, beispielsweise von Ventilatoren, Kompressoren, Pumpen, usw., ergeben sich keine Schutzeingriffe, da diese Lastzuschaltungen fahrzeugseitig minimiert und gestaffelt vorgenommen werden und zwar derart, dass der Strom am Ausgang des Hilfsbetriebestromrichters HSR die Schutztriggerschwelle IHSRn nicht erreicht.

Anders stellt sich dies dahingegen in ausserordentlichen Betriebsarten dar, d.h. bei Überlast oder Kurzschluss.

Im Fall einer Überlast des Hilfsbetriebestromrichters HSR überschreitet der Effektivstrom I_{eff} am Ausgang der Hilfsbetriebestromrichter-Drehstrombrücke die Triggerschwelle IHSRMAX. Nun können zwei alternative Fälle auftreten, je nachdem, ob der Wert des Effektivstroms auch die Triggerschwelle IHSRn überschreitet oder nicht.

### Fall 1: Überschreitung der Triggerschwelle IHSRn

Wenn in einem ersten Fall der Effektivstrom l_{eff} am Ausgang der Hilfsbetriebestromrichter-Drehstrombrücke auch die Triggerschwelle IHSRn überschreitet, kann dies wiederum zu zwei alternativen Fällen a) und b) führen.

### Fall 1a:

In diesem Fall wird die Überlast im überlasteten Stromkreis durch einen Schutzschalter innerhalb einer Wartezeit TWAITKSH abgetrennt. Die entsprechende Schutzmassnahme ist somit ein Eingriff in die Effektivstrombegrenzung durch eine Abtrennung des Kurzschlusses durch den Schutzschalter. Anschliessend wird die Hilfsbetriebestromrichter-Ausgangsspannung mit einer Rampe wieder auf den Sollwert hochgefahren. Aufgrund dieser Vorgehensweise ist ein unterbrechungsfreier Betrieb des Traktionsstromrichters TSR und des Hilfsbetriebestromrichters HSR mit kurzzeitigem Spannungseinbruch im Hilfsbetriebe-Netz mit einer Dauer von maximal 500 ms möglich.

### Fall 1b:

In diesem Fall erfolgt keine Abtrennung der Überlast im überlasteten Stromkreis durch den Schutzschalter während der Wartezeit TWAITKSH. Als Schutzmassnahme erfolgt daraufhin ein Eingriff in die Effektivstrombegrenzung, indem durch Überschreitung der Anzahl von Ansprechen IHSRMAX im Zeitfenster TWAITKSH eine Ventilsperre des gesamten Hilfsbetriebestromrichters HSR verursacht wird. In diesem Fall kommt es daher als Folge zu einer Betriebsunterbrechung des Traktionsstromrichters TSR.

### Fall 2: Keine Überschreitung der Triggerschwelle IHSRn

Wenn dahingegen in Fall 2 der Effektivstrom I_{eff} am Ausgang der Hilfsbetriebestromrichter-Drehstrombrücke nicht die Triggerschwelle IHSRn erreicht, können ebenfalls zwei alternative Fälle a) und b) auftreten.

### Fall 2a:

In diesem Fall wird die Überlast im überlasteten Stromkreis durch den Schutzschalter innerhalb der Wartezeit TWAITOLH abgetrennt, so dass die Schutzmassnahme der Abtrennung des Kurzschlusses durch den Schutzschalter verwirklicht ist und ein unterbrechungsfreier Betrieb des Traktionsstromrichters TSR und des Hilfsbetriebestromrichters HSR möglich ist.

### Fall 2b:

Die Überlast wird im überlasteten Stromkreis durch den Schutzschalter innerhalb der Wartezeit TWAITOLH nicht abgetrennt, so dass als Schutzmassnahme nach Ablauf der Wartezeit TWAITOLH eine Ventilsperre des gesamten Hilfsbetriebestromrichters HSR verursacht wird, was zu einer Betriebsunterbrechung des Traktionsstromrichters TSR führt.

Ein anderer Fall ergibt sich im Falle eines Kurzschlusses in einem Stromkreis des Hilfsbetriebe-Netzes, das zu einem Hilfsbetriebe-Netzeinbruch sowie einem Ausfall der Kühlmittelpumpe führt. Auch hier gibt es wiederum zwei verschiedene Fälle, je nachdem, ob der Kurzschluss durch den Schutzschalter innerhalb der Wartezeit TWAITDR2 abgetrennt wird oder nicht. In Fig. 4 ist der Zeitverlauf des Pumpendrucks und des Effektivstroms für die Kurzschlussfälle Schutzschalter öffnet (Alternative 1) und Schutzschalter öffnet nicht (Alternative 2) gezeigt.

### Fall 1: Schutzschalter öffnet

In diesem Fall wird der Kurschluss im kurzgeschlossenen Stromkreis durch den Schutzschalter innerhalb der Wartezeit TWAITDR2 abgetrennt. Dies bedeutet zugleich als Schutzmassnahme einen Eingriff der Momentanstrombegrenzung und/oder Effektivstrombegrenzung durch die Abtrennung des Kurzschlusses durch den Schutzschalter. Daher wird die Hilfsbetriebestromrichter-Ausgangsspannung mit einer Rampe auf den Sollwert wieder hochgefahren. Auf diese Weise ist ein unterbrechungsfreier Betrieb des Traktionsstromrichters TSR und des Hilfsbetriebestromrichters HSR mit kurzzeitigem Spannungseinbruch im Hilfsbetriebe-Netz mit einer maximalen Dauer von 500 ms möglich.

### Fall 2: Schutzschalter öffnet nicht

Gemäss Fall 2 wird der Kurzschluss im überlasteten bzw. kurgeschlossenen Stromkreis durch den Schutzschalter während der Wartezeit TWAITDR2 nicht abgetrennt. Daher erfolgt als Schutzmassnahme ein Eingriff der Momentanstrombegrenzung und/oder Effektivstrombegrenzung, wodurch entweder bei Überschreitung der Anzahl von Eingriffen THZVS im Zeitfenster t1 oder Überschreitung der Anzahl von Zeitfenstern ANZTt1 im Zeitfenster t2 oder Ablauf der Wartezeit TWAITDR2 eine Ventilsperre des gesamten Hilfsbetriebestromrichters HSR verursacht wird. Daher kommt es als Folge zu einer Betriebsunterbrechnung des Traktionsstromrichters TSR.

Zudem kann noch ein Fall auftreten, in dem es zu einem Kurzschluss im Stromkreis des Hilfsbetriebe-Netzes ohne angeschlossene Kühlmittelpumpe kommt, als dessen Folge ein Hilfsbetriebe-Netzeinbruch auftritt. Ebenfalls gibt es hier zwei alternative Fälle, nämlich den Fall, dass der Kurzschluss abgetrennt wird, und den Fall, dass dies nicht erfolgt. In Fig. 5 ist der Zeitverlauf des Pumpendrucks und des Effektivstroms für die vorstehenden beiden Kurzschlussfälle Schutzschalter öffnet und Schutzschalter öffnet nicht dargestellt.

### Fall 1: Schutzschalter öffnet

Wenn in diesem Fall der Kurzschluss im kurzgeschlossenen Stromkreis durch den Schutzschalter innerhalb der Wartezeit TWAITKSH abgetrennt wird, wird die Schutzmassnahme des Eingriffs der Momentanstrombegrenzung und/oder Effektivstrombegrenzung durch die Abtrennung des Kurzschlusses durch den Schutzschalter verwirklicht. Die Hilfsbetriebestromrichter-Ausgangsspannung wird mit einer Rampe auf den Sollwert wieder hochgefahren. Aufgrund dessen wird ein unterbrechnungsfreier Betrieb mit kurzzeitigem Spannungseinbruch im Hilfsbetriebe-Netz mit einer Dauer von maximal 500 ms realisiert.

### Fall 2: Schutzschalter öffnet nicht

Im anderen Fall wird der Kurzschluss im kurzgeschlossenen Stromkreis durch den Schutzschalter während der Wartezeit TWAITKSH nicht abgetrennt. Die sich daraus ergebende Schutzmassnahme ist ein Eingriff der Momentanstrombegrenzung und/oder Effektivstrombegrenzung, der bei Überschreitung der Anzahl von Eingriffen THZVS im Zeitfenster t1 oder Überschreitung der Anzahl von Zeitfenstern ANZTt1 im Zeitfenster t2 oder Überschreitung der Anzahl Ansprechen IHSRMAX im Zeitfenster TWAITKSH eine Ventilsperre des gesamten Hilfsbetriebestromrichters HSR verursacht. Somit kommt es als Folge zu einer Betriebsunterbrechung des Traktionsstromrichters TSR.

Somit lässt sich hinsichtlich des Verhaltens der erfindungsgemässen Einrichtung zum Stromrichter-Überlastschutz z.B. bei Kurzschlüssen im Hilfsbetriebenetz folgendes feststellen:
1) Kurzschlüsse im Bereich zwischen der Wechselstromseite der Hilfsbetriebestromrichter-Drehstrombrücke und den Eingängen der Schutzschalter auf der Trafosekundärseite führen zu einer Stromrichter-Gesamtventilsperre SVS gefolgt von einer Betriebsunterbrechung des Traktionsstromrichters TSR und des Hilfsbetriebestromrichters HSR.
2) Kurzschlüsse im Niederspannungsbereich des Hilfsbetriebe-Netzes nach den Schutzschaltern haben hingegen für den Fall, dass die Schutzschalter ansprechen, nur einen transienten Einbruch der Spannung im Hilfsbetriebe-Netz zur Folge. Falls die Schutzschalter nicht ansprechen, kommt es zu einer Betriebsunterbrechung des Traktionsstromrichters TSR und des Hilfsbetriebestromrichters HSR.

Auf diese Weise können auch im Falle eines Ausfalls der Schutzschalter Schäden an den Stromrichtern zuverlässig verhindert werden.

Zusammenfassend offenbart die vorliegende Erfindung eine Einrichtung zum Stromrichter-Überlastschutz, durch die zuverlässig, auch bei fehlerhaftem Nichtansprechen von Schutzschaltern Beschädigungen an den Stromrichtern vermieden werden können, indem innerhalb kürzester Zeit ein überlasteter bzw. kurzgeschlossener Stromkreis abgetrennt wird. Dazu umfasst die Einrichtung eine Einrichtung zum Momentanstrombegrenzung 1, eine Einrichtung zur Effektivstrombegrenzung sowie eine Einrichtung zur Zeitbegrenzung. Die Einrichtung zur Momentanstrombegrenzung 1 leitet bei Überschreiten eines aus einer Mehrzahl von Schwellenwerten durch den Zweigpaar-Wechselstrom eine Stromrichter-Ventilsperre ein, in der an Stelle nur eines Zweigpaares sämtliche Zweigpaare gesperrt werden. Die Einrichtung zur Effektivstrombegrenzung 2 ermittelt Schwellenwertüberschreitungen des aus dem Phasenstrom ermittelten Effektivwerts am Ausgang des Hilfsbetriebestromrichters und veranlasst ansprechend darauf eine Reduzierung der Aussteuerung des Stromrichters. Die Einrichtung zur Zeitbegrenzung stellt sicher, dass ein Stromrichter-Überlastbetrieb nur für eine begrenzte Zeit aufrecht erhalten wird. Wenn während einer bestimmten Zeit keine Trennung eines überlasteten oder kurzgeschlossenen Stromkreises erfolgt, wird ansprechend auf ein Ausgangssignal der Einrichtung zur Zeitbegrenzung der Stromrichter gesperrt.

## Patentansprüche

1. Einrichtung zum Stromrichter-Überlastschutz für einen Stromrichter mit mehreren Zweigpaaren (4), umfassend:
eine Einrichtung zur Momentanstrombegrenzung (1),
eine Einrichtung zur Effektivstrombegrenzung (2) und
eine Einrichtung zur Zeitbegrenzung,
wobei die Einrichtung zur Momentanstrombegrenzung (1)
(a) ansprechend auf ein Überschreiten eines Strom-Schwellenwertes (THZVS) für eine Zweigpaar-Ventilsperre eine Steuereinrichtung (5) zur Durchführung einer Zweigpaar-Ventilsperre veranlasst sowie nach Unterschreitung des Strom-Schwellenwertes (THZVS) die Steuereinrichtung (5) zu einer Wieder-Freigabe des zuvor gesperrten Zweigpaares (4) veranlasst,
(b) ansprechend auf eine Überschreitung eines Schwellenwertes (ANZTHZVS) einer Anzahl von Strom-Schwellenwertüberschreitungen in einem vorbestimmten Zeitraum (t1) und/oder eine Überschreitung eines Schwellenwertes (ANZTt1) einer Anzahl von Wiederholungen des vorbestimmten Zeitraums (t1) die Steuereinrichtung zur Durchführung einer Stromrichter-Ventilsperre (SVS) veranlasst,
die Einrichtung zur EfFektivstrombegrenzung (2) ansprechend auf ein Vergleichsergebnis einer maximal zulässigen Anzahl von Zyklen eines vorbestimmten Effektivwertes des Phasenstroms und einer aktuellen Anzahl von Zyklen bei Überschreitung der maximal zulässigen Anzahl von Zyklen die Steuereinrichtung (5) zur Reduktion einer Aussteuerung veranlasst, und
die Einrichtung zur Zeitbegrenzung ansprechend auf eine fortwährende Überschreitung eines maximalen Effektivwertes des Stroms (IHSRMAX) während eines vorbestimmten Zeitraums (TWAITOLH) und/oder eine fortwährende Unterschreitung eines minimalen Druckwertes (KDR2) in einem Kühlmittelkreislauf während eines vorbestimmten Zeitraums (TWAITDR2) und/oder eine Überschreitung einer maximal zulässigen Anzahl von Ansprechen des maximalen Effektivwertes des Stroms (IHSRMAX) während eines vorbestimmten Zeitraums (TWAITKSH) und/oder eine fortwährende Überschreitung eines anderen Schwellenwertes während eines vorbestimmten Zeitraums, die auftreten, wenn ein Schutzschalter nicht angesprochen hat, die Steuereinrichtung (5) zur Durchführung einer Stromrichter-Ventilsperre (SVS) veranlasst.

2. Einrichtung zum Stromrichter-Überlastschutz nach Anspruch 1, wobei die Einrichtung zur Momentanstrombegrenzung (1) einen Komparator (11) umfasst, der, nachdem ein Zweigpaar-Wechselstrom den Strom-Schwellenwert (THZVS) für eine Zweigpaar-Ventilsperre (ZVS) überschritten hat, die Steuereinrichtung (5) zur Zweigpaar-Ventilsperre veranlasst und ansprechend auf eine nachfolgende Unterschreitung des Strom-schwellenwerts (THZVS) die Steuereinrichtung veranlasst, die Taktung dieses Zweipaars (4) wieder freizugeben.

3. Einrichtung zum Stromrichter-Überlastschutz nach Anspruch 1 oder 2, wobei
die Einrichtung zur Momentanstrombegrenzung (1) einen ZweipunktRegler mit einer unterlagerten Überwachung der Anzahl von Eingriffen dieses Zweipunktreglers umfasst, der selektiv auf den Schaltzustand jedes Zweigpaares (4) wirkt.

4. Einrichtung zum Stromrichter-Überlastschutz nach Anspruch 3, wobei zur Überwachung der Anzahl von Eingriffen des Zweipunktreglers zwei Zeitfenster (t1, t2) ausgebildet sind, von denen in dem ersten Fenster (t1) die Anzahl von Eingriffen des Strom-Schwellenwerts (THZVS) und im zweiten Fenster (t2) die Anzahl von Wiederholungen des ersten Zeitensters (t1) gezählt werden.

5. Einrichtung zum Stromrichter-Überlastschutz nach Anspruch 4, wobei als Zeitfenster zwei nicht retriggerbare Monoflops (12, 13) mit den Zeiten t1 und t2 entsprechend der Grösse des ersten bzw. zweiten Fensters ausgebildet sind.

6. Einrichtung zum Stromrichter-Überlastschutz nach einem der Ansprüche 1 bis 5, wobei die Einrichtung zur Effektivstrombegrenzung (2) eine Messeinrichtung zur Abtastung des Phasenstroms sowie zur Speicherung dieser Abtastwerte sowie eine Verarbeitungseinrichtung zur Berechnung eines Effektivwerts aus den gespeicherten Abtastwerten und zum Vergleich einer maximal zulässigen Anzahl von Zyklen eines bestimmten Effektivwerts mit der aktuellen Anzahl von Zyklen des bestimmten Effektivwerts umfasst.

7. Einrichtung zum Stromrichter-Überlastschutz nach Anspruch 6, wobei die Messeinrichtung eine Abtasteinrichtung (21) zur Abtastung des Phasenstroms und Ausgabe von Phasenwerten und eine Mess-Speichereinrichtung (22) zur Speicherung der aus der Abtasteinrichtung ausgegebenen Phasenwerte umfasst.

8. Einrichtung zum Stromrichter-Überlastschutz nach Anspruch 6 oder 7, wobei die Verarbeitungseinrichtung eine Einrichtung zur Berechnung eines fektivwerts, einen Komparator (28) zum Vergleich einer maximal zulässigen Anzahl von Zyklen mit der durch einen Zykluszähler (27) ansprechend auf einen Zyklustakt bestimmten aktuellen Anzahl von Zyklen des bestimmten Effektivwerts, wobei maximal zulässige Anzahl von Zyklen mittels einer Schutzkennlinie (26) aus dem berechneten Effektivwert bestimmt wird, und zur Ausgabe eines Signals zur Reduktion der Aussteuerung, wenn die maximal zulässige Anzahl von Zyklen überschritten ist.

9. Verfahren zum Stromrichter-Überlastschutzfür einen Stromrichter mit mehreren Zweigpaaren (4), umfassend eine Momentanstrombegrenzung, eine Effektivstrombegrenzung und eine Zeitbegrenzung, wobei
zur Momentanstrombegrenzung
(a) ansprechend auf ein Überschreiten eines Strom-Schwellenwertes (THZVS) für eine Zweigpaar-Ventilsperre eine Steuereinrichtung (5) zur Durchführung einer Zweigpaar-Ventilsperre veranlasst wird sowie nach Unterschreitung des Strom-Schwellenwertes (THZVS) die Steuereinrichtung (5) zu einer Wieder-Freigabe des zuvor gesperrten Zweigpaares (4) veranlasst wird,
(b) ansprechend auf eine Überschreitung eines Schwellenwertes (ANZTHZVS) einer Anzahl von Strom-Schwellenwertüberschreitungen in einem vorbestimmten Zeitraum (t1) und/oder eine Überschreitung eines Schwellenwertes (ANZTt1) einer Anzahl von Wiederholungen des vorbestimmten Zeitraums (t1) die Steuereinrichtung zur Durchführung einer Stromrichter-Ventilsperre (SVS) veranlasst wird,
zur Effektivstrombegrenzung:
ansprechend auf ein Vergleichsergebnis einer maximal zulässigen Anzahl von Zyklen eines vorbestimmten Effektivwertes des Phasenstroms und einer aktuellen Anzahl von Zyklen bei Überschreitung der maximal zulässigen Anzahl von Zyklen die Steuereinrichtung (5) zur Reduktion einer Aussteuerung veranlasst wird, und
zur Zeitbegrenzung
ansprechend auf eine fortwährende Überschreitung eines maximalen Effektivwertes des Stroms (IHSRMAX) während eines vorbestimmten Zeitraums (TWAITOLH) und/oder eine fortwährende Unterschreitung eines minimalen Druckwertes (KDR2) in einem Kühlmittelkreislauf während eines vorbestimmten Zeitraums (TWAITDR2) und/oder eine Überschreitung einer maximal zulässigen Anzahl von Ansprechen des maximalen Effektivwertes des Stroms (IHSRMAX) während eines vorbestimmten Zeitraums (TWAITKSH) und/oder eine fortwährende Überschreitung eines anderen Schwellenwertes während eines vorbestimmten Zeitraums, die auftreten, wenn ein Schutzschalter nicht angesprochen hat, die Steuereinrichtung (5) zur Durchführung einer Stromrichter-Ventilsperre (SVS) veranlasst wird.

## Claims

1. An installation for converter overload protection for a converter with several branch pairs (4) comprising:
a device for limiting the instantaneous current (1),
a device for limiting the effective current (2) and
a device for limiting the time,
wherein the device for limiting the instantaneous current (1)
(a) prompts a control device (5) to execute a branch pair valve block in response to an exceedance of a current threshold value (THZVS) for a branch pair valve block as well as prompts the control device (5) to release the previously blocked branch pair (4) again in response to an undershooting of the current threshold value (THZVS),
(b) prompts the control device to execute a converter valve block (SVS) in response to an exceedance of a threshold value (ANZTHZVS) of a number of current threshold value exceedances in a predetermined period (t1) and/or in response to an exceedance of a threshold value (ANZTt1) of a number of repetitions of the predermined period (t1),
the device for limiting the effective current (2) prompts the control device (5) to reduce a modulation in response to a comparison result of a maximally permissible number of cycles of a predetermined effective value of the phase current and of a current number of cycles upon exceedance of the maximally permissible number of cycles and
the device for limiting the time prompts the control device (5) to execute a converter valve block (SVS) in response to a perpetual exceedance of a maximal effective value of the current (IHSRMAX) during a predetermined period (TWAITOLH) and/or in response to a perpetual undershooting of a minimal pressure value (KDR2) in a coolant cycle during a predetermined period (TWAITDR2) and/or in response to an exceedance of a maximally permissible number of activations of the maximal effective value of the current (IHSRMAX) during a predetermined period (TWAITKSH) and/or in response to a perpetual exceedance of another threshold value during a predetermined period, which occur when a circuit breaker has not responded.

2. The installation for converter overload protection according to claim 1, wherein
the device for limiting the instantaneous current (1) comprises a comparator (11), which prompts the control device (5) to block the branch pair valve after a branch pair alternating current has exceeded the current threshold value (THZVS) for a branch pair valve block (ZVS) and which prompts the control device to release the clocking of said branch pair (4) again in response to a subsequent undershooting of the current threshold value (THZVS).

3. The installation for converter overload protection according to claim 1 or 2, wherein
the device for limiting the instantaneous current (1) comprises a two-step controller with a subordinate monitoring of the number of engagements of said two-step controller, which selectively acts on the switching state of each of the branch pairs (4).

4. The installation for converter overload protection according to claim 3, wherein
two time slots (t1, t2) are embodied for monitoring the number of engagements of the two-step controller, of which the number of engagements of the current threshold value (THZVS) are counted in the first slot (t1) and of which the number of repetitions of the first time slot (t1) are counted in the second slot (t2).

5. The installation for the converter overload protection according to claim 4, wherein
as the time slots, two mono-stable flip-flops (12, 13), which cannot be re-triggered and which comprise the times t1 and t2, are embodied according to the size of the first and of the second slot, respectively.

6. The installation for converter overload protection according to one of claims 1 to 5,
wherein the device for limiting the effective current (2) comprises a measuring device for sampling the phase current as well as for storing said sampling values as well as a processing device for computing an effective value from the stored sampling values and for comparing a maximally permissible number of cycles of a defined effective value with the current number of cycles of the defined effective value.

7. The installation for converter overload protection according to claim 6, wherein
the measuring device comprises a sampling device (21) for sampling the phase current and for outputting phase values and a measuring storing device (22) for storing the phase values output by the sampling device.

8. The installation for converter overload protection according to claim 6 or 7, wherein
the processing device comprises a device for computing an effective value and a comparator (28) for comparing a maximally permissible number of cycles with the current number of cycles of the defined effective value, said number of cycles of the defined effective value being determined by means of a cycle counter (27) in response to a cycle pulse,
wherein a maximally permissible number of cycles is determined from the computed effective value by means of a protective characteristic curve (26), and for outputting a signal for reducing the modulation when the maximally permissible number of cycles is exceeded.

9. A method for converter overload protection for a converter with several branch pairs (4) comprising an instantaneous current limitation, an effective current limitation and a time limitation, wherein
for the instantaneous current limitation
(a) a control device (5) is prompted to execute a branch pair valve block in response to an exceedance of a current threshold value (THZVS) for a branch pair valve block as well as the control device (5) is prompted to release the previously blocked branch pair (4) again in response to an undershooting of the current threshold value (THZVS),
(b) the control device is prompted to execute a converter valve block (SVS) in response to an exceedance of a threshold value (ANZTHZVS) of a number of current threshold value exceedances in a predetermined period (t1) and/or in response to an exceedance of a threshold value (ANZTt1) of a number of repetitions of the predermined period (t1),
for the effective current limitation
the control device (5) is prompted to reduce a modulation in response to a comparison result of a maximally permissible number of cycles of a predetermined effective value of the phase current and of a current number of cycles upon exceedance of the maximally permissible number of cycles and
for the time limitation
the control device (5) is prompted to execute a converter valve block (SVS) in response to a perpetual exceedance of a maximal effective value of the current (IHSRMAX) during a predetermined period (TWAITOLH) and/or in response to a perpetual undershooting of a minimal pressure value (KDR2) in a coolant cycle during a predetermined period (TWAITDR2) and/or in response to an exceedance of a maximally permissible number of activations of the maximal effective value of the current (IHSRMAX) during a predetermined period (TWAITKSH) and/or in response to a perpetual exceedance of another threshold value during a predetermined period, which occur when a circuit breaker has not responded.

## Revendications

1. Installation pour la protection contre les surcharges d'un convertisseur de puissance avec plusieurs paires de branches (4), qui comprend:
un dispositif pour la limitation du courant instantané (1), un dispositif pour la limitation du courant effectif (2) et
un dispositif pour la limitation du temps,
le dispositif pour la limitation du courant instantané (1),
(a) en réponse à un dépassement vers le haut d'une valeur de seuil de courant (THZVS) pour un blocage d'une valve de paire de branches, amenant un dispositif de commande (5) à exécuter un blocage de la valve de paire de branches et, après un dépassement vers le bas de la valeur de seuil de courant (THZVS), amenant ledit dispositif de commande (5) à débloquer la paire de branches (4) bloquée auparavant,
(b) en réponse à un dépassement vers le haut d'une valeur de seuil (ANZTHZVS) d'un nombre de dépassements vers le haut d'une valeur de seuil de courant au cours d'un laps de temps prédéterminé (t1) et / ou à un dépassement vers le haut d'une valeur de seuil (ANZTt1) d'un nombre de réitérations du laps de temps prédéterminé (t1), amenant le dispositif de commande (5) a exécuter un blocage de la valve du convertisseur de puissance,
le dispositif de limitation du courant effectif (2), en réponse à un résultat de comparaison entre un nombre admissible, maximal de cycles d'une valeur effective prédéterminée du courant de phase et un nombre actuel de cycles lors du dépassement vers le haut du nombre admissible, maximal de cycles, amenant le dispositif de commande (5) à diminuer une modulation, et le dispositif de limitation du temps, en réponse à un dépassement continuel vers le haut d'une valeur effective de courant maximale (IHSRMAX) pendant un laps de temps prédéterminé (TWAITOLH) et / ou un dépassement continuel vers le bas d'une valeur de pression minimale (KDR2), dans un circuit d'agent de refroidissement, pendant un laps de temps prédéterminé (TWAIDR2) et / ou un dépassement vers le haut d'un nombre admissible, maximal de réponses de la valeur effective de courant maximale (IHSRMAX) au cours d'un laps de temps prédéterminé (TWAITKSH) et / ou un dépassement continuel vers le haut d'une autre valeur de seuil au cours d'un laps de temps prédéterminé, qui se produisent quand un commutateur de protection n'a pas répondu, amenant le dispositif de commande (5) à exécuter un blocage de la valve du convertisseur de puissance (SVS).

2. Installation pour la protection contre les surcharges d'un convertisseur de puissance selon la revendication 1, le dispositif pour la limitation du courant instantané (1) comprenant un comparateur (11) qui, après qu'un courant alternatif d'une paire de branches a dépassé vers le haut la valeur de seuil de courant (THZVS) pour un blocage de la valve de paire de branches (ZVS), amène le dispositif de commande (5) à déclencher un blocage de valve de paire de branches, et, en réponse à un dépassement vers le bas de la valeur de seuil de courant (THZVS), y faisant suite, amène le dispositif de commande à libérer de nouveau la cadence de cette paire de branches (4).

3. Installation pour la protection contre les surcharges d'un convertisseur de puissance selon revendication 1 ou 2, le dispositif pour la limitation du courant instantané (1) comprenant un régulateur à deux caractéristiques avec un contrôle sous-jacent du nombre d'opération de ce régulateur à deux caractéristiques, qui agit sélectivement sur l'état de commutation de chaque paire de branches (4).

4. Installation pour la protection contre les surcharges d'un convertisseur de puissance selon la revendication 3, deux fenêtres de temps (t1, t2) étant formées pour le contrôle du nombre d'interventions du régulateur à deux caractéristiques, le nombre des interventions de la valeur de seuil de courant (THZVS) étant compté dans la première fenêtre (t1) et le nombre des répétitions de la première fenêtre (t1) étant compté dans la deuxième fenêtre (t2).

5. Installation pour la protection contre les surcharges d'un convertisseur de puissance selon la revendication 4, deux mono-flops (12, 13) ne pouvant pas être réamorcés étant conçus en tant que fenêtres de temps, avec les temps t1 et t2 en fonction de la grandeur de la première, respectivement de la deuxième fenêtre.

6. Installation pour la protection contre les surcharges d'un convertisseur de puissance selon l'une des revendications 1 à 5, le dispositif de limitation du courant effectif (2) comprenant un dispositif de mesure pour l'échantillonnage du courant de phase, ainsi que pour la mémorisation de ces valeurs d'échantillonnage, ainsi qu'un dispositif de traitement pour le calcul d'une valeur effective à partir des valeur d'échantillonnage mémorisées et pour la comparaison entre un nombre admissible maximal de cycles d'une valeur effective définie et le nombre actuel de cycles de la valeur effective définie.

7. Installation pour la protection contre les surcharges d'un convertisseur de puissance selon la revendication 6, le dispositif de mesure comprenant un dispositif
d'échantillonnage (21) pour l'échantillonnage du courant de phase et pour la sortie de valeurs de phase, et un dispositif de mémorisation de mesure (22) pour la mémorisation des valeurs de phase délivrées par le dispositif d'échantillonnage.

8. Installation pour la protection contre les surcharges pour un convertisseur de puissance selon revendication 6 ou 7, le dispositif de traitement comprenant un dispositif pour le calcul d'une valeur effective, un comparateur (28) pour la comparaison entre un nombre admissible maximal de cycles et le nombre actuel de cycles de la valeur effective définie, déterminé par un compteur de cycles (27) en réponse à une cadence de cycles, le nombre de cycles admissible, maximal étant défini au moyen d'une ligne caractéristique de protection (26), à partir de la valeur effective, calculée, et pour la sortie d'un signal pour la réduction de la modulation, quand le nombre admissible, maximal de cycles est surpassé.

9. Procédé pour la protection contre les surcharges pour un convertisseur de puissance avec plusieurs paires de branches (4), comprenant une limitation de courant instantané, une limitation de courant effectif et une limitation de temps, selon lequel,
pour la limitation du courant instantané,
(a) en réponse à un dépassement vers le haut d'une valeur de seuil de courant (THZVS) pour un blocage de la valve de paire de branches, un dispositif de commande (5) est amené à exécuter un blocage de la valve de paire de branches, et, après un dépassement vers le bas de la valeur de seuil de courant (THZVS), le dispositif de commande (5) est incité à débloquer de nouveau la paire de branches (4) bloquée auparavant,
(b) en réponse à un dépassement vers le haut d'une valeur de seuil (ANZTHZVS) d'un nombre de dépassements vers le haut d'une valeur de seuil de courant au cours d'un laps de temps prédéterminé (t1) et / ou à un dépassement vers le haut d'une valeur de seuil (ANZTt1) d'un nombre de réitérations du laps de temps prédéterminé (t1), le dispositif de commande (5) est amené a exécuter un blocage de la valve du convertisseur de puissance (SVS);
pour la limitation du courant effectif,
en réponse à un résultat de comparaison entre un nombre admissible, maximal de cycles d'une valeur effective prédéterminée du courant de phase et un nombre actuel de cycles lors du dépassement vers le haut du nombre admissible, maximal de cycles, le dispositif de commande (5) est amené à procéder à une diminution d'une modulation, et
pour la limitation du temps,
en réponse à un dépassement vers le haut continuel d'une valeur effective de courant maximale (IHSRMAX) pendant un laps de temps prédéterminé (TWAITOLH) et / ou un dépassement vers le bas continuel d'une valeur de pression minimale (KDR2), dans un circuit d'agent de refroidissement, pendant un laps de temps prédéterminé (TWAIDR2) et / ou un dépassement vers le haut d'un nombre admissible, maximal de réponses de la valeur effective maximale du courant (IHSRMAX) au cours d'un laps de temps prédéterminé (TWAITKSH) et / ou un dépassement vers le haut continuel d'une autre valeur de seuil au cours d'un laps de temps prédéterminé, qui se produisent quand un commutateur de protection n'a pas répondu, le dispositif de commande (5) est amené à exécuter un blocage de la soupape du convertisseur de puissance (SVS).
